# FASCICULE DE BREVET EUROPEEN

(11) **EP 2 715 267 B1**
(45) Date de publication et mention de la délivrance du brevet: **13.01.2016**
(21) Numéro de dépôt: 12740888.8
(22) Date de dépôt: 21.05.2012
(51) Int. Cl.: F28F 9/00, F02B 29/04, F02M 35/112

(54) **DISPOSITIF D'ADMISSION D'AIR AVEC ÉCHANGEUR THERMIQUE**
LUFTEINLASSVORRICHTUNG MIT WÄRMETAUSCHER
AIR INTAKE DEVICE WITH HEAT EXCHANGER

(30) Priorité: 26.05.2011 FR 1154578
(43) Date de publication de la demande: 09.04.2014
(73) Titulaire: Valeo Systemes Thermiques, 78320 Le Mesnil-Saint-Denis Cedex (FR)
(72) Inventeur: ODILLARD, Laurent, F-72390 Le Luart (FR); DEVEDEUX, Sébastien, F-78000 Versailles (FR)
(74) Mandataire: Metz, Gaëlle
(86) Numéro de dépôt international: PCT/EP2012/002160
(87) Numéro de publication internationale: WO 2012/159730

(56) Documents cités:
- EP-A1- 0 285 504
- EP-A1- 0 406 774
- EP-A2- 0 578 916
- DE-A1-102009 025 282
- FR-A1- 2 645 209
- JP-A- 7 052 637

## Description

L'invention concerne un échangeur thermique notamment pour véhicule automobile. L'invention concerne encore un dispositif d'admission d'air comprenant un tel échangeur.

Un échangeur thermique, par exemple utilisé dans l'industrie automobile, comprend des éléments d'échange thermique et d'écoulement de fluide dans lesquels circulent des fluides échangeant de la chaleur entre eux. Les éléments d'échange thermique peuvent par exemple comprendre des tubes ou des plaques, des ailettes de perturbation de la circulation de gaz et/ou des perturbateurs d'écoulement de fluide ou autres.

On connaît de tels échangeurs utilisés dans le domaine automobile, notamment dans le domaine des moteurs thermiques suralimentés.

Dans ce cas, l'échangeur thermique encore appelé refroidisseur d'air de suralimentation (en abrégé RAS), permet de refroidir l'air de suralimentation du moteur par échange thermique avec un autre fluide comme de l'air extérieur ou un liquide comme l'eau du circuit de refroidissement du moteur, formant ainsi un échangeur du type air/air ou liquide/air.

Traditionnellement, l'air est reçu au niveau d'un collecteur d'admission, souvent désigné par l'homme du métier sous sa dénomination anglaise « intake manifold ».

Le collecteur est fixé à la culasse de la chambre de combustion, c'est-à-dire à l'entrée des cylindres. En fonction du régime moteur, l'air peut être refroidi, en tout ou partie, ou pas.

Selon une solution connue, l'échangeur thermique RAS est reçu dans le collecteur et permet de refroidir l'air qui le traverse.

À cet effet, le collecteur présente une face d'ouverture permettant l'introduction de l'échangeur RAS en son sein. Cette ouverture est ultérieurement fermée par un capot de fermeture.

Cependant cette réalisation peut présenter des inconvénients d'étanchéité, ce qui peut avoir pour conséquence de mauvaises performances d'échange thermique.

En effet, une mauvaise gestion de l'étanchéité entre le faisceau de l'échangeur et le collecteur d'admission, peut engendrer une fuite entre le faisceau et le collecteur, et ainsi entraîner une baisse de performance significative.

Par ailleurs, le maintien de l'échangeur dans le collecteur peut ne pas être suffisamment efficace.

L'invention a pour objectif de proposer un échangeur thermique présentant une étanchéité améliorée permettant d'optimiser les performances de l'échangeur, tout en assurant un maintien efficace de l'échangeur.

À cet effet, l'invention a pour objet un échangeur thermique entre au moins deux fluides, notamment pour véhicule automobile, comprenant :
- un faisceau d'échange thermique entre lesdits fluides, et
- un carter de réception dudit faisceau,
caractérisé en ce que ledit carter présente au moins un bord relevé, et en ce que ledit échangeur comporte en outre un joint d'étanchéité en matériau plastique rigide, enveloppant ledit au moins un bord relevé et configuré pour assurer l'étanchéité entre ledit échangeur et un contenant dudit échangeur.

Ledit échangeur peut en outre comporter une ou plusieurs caractéristiques suivantes, prises séparément ou en combinaison :
- ledit joint d'étanchéité est un joint à lèvre;
- ledit joint d'étanchéité est fixé sur ledit au moins un bord relevé;
- ledit au moins un bord relevé présente des premiers moyens de clippage coopérant avec des seconds moyens de clippage complémentaires portés par ledit joint d'étanchéité;
- ledit joint d'étanchéité est réalisé en un matériau plastique rigide de la famille des polyamides;
- ledit carter présente une forme générale sensiblement en « U » avec trois bords relevés d'un même côté dudit carter, et ledit joint d'étanchéité présente une forme générale sensiblement en « U » complémentaire desdits bords relevés;
- ledit échangeur est configuré pour refroidir l'air de suralimentation d'un moteur dans un véhicule automobile

L'invention concerne aussi un dispositif d'admission d'air, notamment pour véhicule automobile, caractérisé en ce qu'il comprend un échangeur thermique tel que défini ci-dessus ainsi qu'un collecteur d'admission recevant ledit échangeur.

Ledit dispositif peut en outre comporter une ou plusieurs caractéristiques suivantes, prises séparément ou en combinaison :
- ledit collecteur d'admission présente une ouverture configurée pour l'insertion dudit échangeur dans ledit collecteur d'admission et fermée par ledit échangeur par assemblage mécanique;
- ledit joint d'étanchéité est interposé entre ledit carter dudit faisceau et ledit collecteur d'admission;
- ledit joint d'étanchéité a pour fonction d'une part l'étanchéité entre ledit échangeur et ledit collecteur d'admission, et d'autre part le guidage mécanique dudit échangeur lors de l'assemblage dudit échangeur audit collecteur d'admission;
- ledit dispositif présente une interférence de l'ordre de 0,1 mm à 0,25 mm entre ledit joint d'étanchéité et le corps dudit collecteur délimitant une gorge de réception dudit joint.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une vue éclatée en perspective représentant un échangeur thermique et un joint d'étanchéité de l'échangeur,
- la figure 2 est une vue éclatée d'un dispositif d'admission, représentant en perspective un échangeur thermique et un collecteur d'admission,
- la figure 3a est une vue en coupe partielle de l'échangeur montrant un système de clippage selon une première variante de réalisation,

- la figure 3b est une vue selon la coupe A-A de la figure 3a,
- la figure 4a une vue en coupe partielle de l'échangeur montrant un système de clippage selon une deuxième variante de réalisation,
- la figure 4b est une vue selon la coupe A-A de la figure 4a,
- la figure 5 est une vue en coupe du dispositif d'admission représentant le joint d'étanchéité reçu dans une gorge du collecteur d'admission.

Dans ces figures, les éléments sensiblement identiques portent les mêmes références.

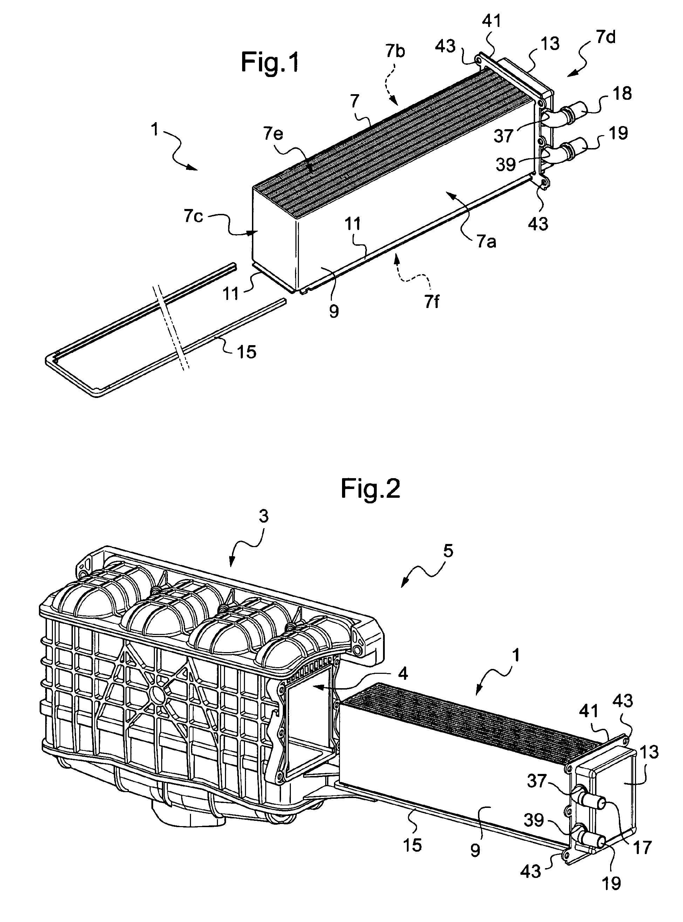

L'invention concerne un échangeur thermique. On a représenté sur la figure 1, un tel échangeur thermique désigné par la référence générale 1.

Un tel échangeur 1 peut être utilisé en particulier pour refroidir l'air de suralimentation pour moteur thermique de véhicule automobile.

Dans ce cas, l'échangeur 1 peut être agencé dans un collecteur 3 d'admission d'air, autrement appelé répartiteur de gaz d'alimentation, comme l'illustre la figure 2.

Pour cela, le collecteur 3 peut présenter une ouverture latérale 4 qui autorise l'insertion de l'échangeur 1 en son sein. L'assemblage peut se faire par insertion de l'échangeur 1 dans le collecteur 3 via l'ouverture 4 associée du collecteur 3 par exemple selon le sens longitudinal de l'échangeur 3.

Le collecteur 3 est généralement monté sur la culasse et permet l'admission de l'air de suralimentation dans la culasse.

Le collecteur 3 d'admission d'air et de l'échangeur 1 reçu dans le collecteur 3 forment un dispositif 5 d'admission d'air de suralimentation.

Par ailleurs, l'échangeur 1 peut être un échangeur dit « air-eau », c'est-à-dire un échangeur dans lequel les fluides qui échangent de la chaleur sont l'air et l'eau.

Dans le cas d'un refroidisseur d'air de suralimentation; l'eau est de préférence de l'eau du circuit de refroidissement dit "basse température" dudit moteur; il s'agit typiquement d'eau glycolée.

Selon le mode de réalisation illustré sur la figure 1, l'échangeur 1 présente une forme générale sensiblement parallélépipédique.

Cet échangeur 1 comporte :
- un faisceau 7 d'échange thermique entre un premier fluide tel que l'air de suralimentation et un deuxième fluide tel que le liquide de refroidissement,
- un carter 9 de réception du faisceau d'échange 7, présentant des bords relevés 11,
- un capot 13 de fermeture du carter 9, et
- un joint d'étanchéité 15 en matériau plastique rigide enveloppant les bords relevés 11 du carter 9.

### Le faisceau d'échange

Selon le mode de réalisation illustré, le faisceau 7 d'échange thermique présente une forme générale sensiblement parallélépipédique avec deux grandes faces latérales 7a,7b, deux petites faces latérales 7c,7d et deux faces d'extrémité 7e,7f.

Ce faisceau 7 peut comporter de façon classique un empilement de plaques ou de tubes, délimitant des premiers canaux de circulation du premier fluide et des seconds canaux de circulation du second fluide.

Le premier fluide traverse par exemple les premiers canaux dans le sens longitudinal du faisceau 7 et le second fluide traverse par exemple les seconds canaux transversalement de la première face d'extrémité 7e vers la deuxième face d'extrémité opposée 7f par exemple.

On peut prévoir dans les premiers canaux des ailettes de perturbation, de façon à perturber l'écoulement de l'air dans ces premiers canaux en augmentant la surface d'échange. En alternative ou en complément, on peut prévoir des turbulateurs (non représentés) du second fluide circulant dans les seconds canaux, de manière à améliorer l'échange thermique.

Ces perturbations permettent de faciliter les échanges thermiques entre l'air et l'eau au travers des parois des plaques ou des tubes.

L'échangeur 1 comporte en outre des tubulures d'entrée 17 et de sortie 19, pour l'admission du second fluide dans le faisceau 7 et la sortie du second fluide après avoir circulé dans les seconds canaux. Ces tubulures 17,19 communiquent avec des ouvertures (non représentées) prévues dans les plaques ou tubes du faisceau 7 pour permettre la circulation du second fluide dans le faisceau 7.

### Carter

Comme dit précédemment, le carter 9 reçoit le faisceau d'échange 7.

Le carter 9 présente une forme ouverte, dans l'exemple illustré, au niveau d'une petite face latérale 7d du faisceau 7.

Selon le mode de réalisation illustré, le faisceau 7 étant parallélépipédique, le carter 9 présente une forme complémentaire sensiblement en « U ». Cette forme en « U » permet de couvrir les deux grands faces latérales 7a,7b et une petite face latérale 7c du faisceau 7.

Les faces d'extrémité 7e,7f du faisceau 7 ne sont pas couvertes par le carter 9 pour permettre la circulation du premier fluide, tel que l'air de suralimentation.

Par ailleurs, afin de permettre l'admission du second fluide dans les seconds canaux, le carter 9 présente des orifices associés (non visibles sur les figures) communiquant respectivement avec les tubulures d'entrée 17 et de sortie 19 et avec les ouvertures prévues dans le faisceau 7.

Le carter 9 comporte en outre un ou plusieurs bords relevés 11 d'un même côté du carter 9, comme l'illustre la figure 1. Ces bords relevés 11 sont donc en saillie par rapport au plan général défini par les faces du carter 9.

Un joint d'étanchéité 15 en plastique rigide enveloppe ces bords relevés 11 comme l'illustre la figure 2.

On peut citer comme exemple de matériau plastique rigide pour le joint d'étanchéité 15, des polyamides tels que PA 6 pour polycaprolactame, ou encore PA 6-6 pour polyhexaméthylène adipamide.

Un tel joint d'étanchéité 15 rigide participe à la tenue mécanique de l'échangeur 1 en jouant un rôle de raidisseur. Le joint d'étanchéité 15 joue en outre un rôle d'amortisseur.

Les bords 11 relevés sont donc insérés dans le joint 15 rigide, par exemple par coulissement selon le sens longitudinal du faisceau 7.

Dans l'exemple illustré sur la figure 1, le carter 9 est sensiblement en « U » et présente trois bords 11 relevés.

Le joint d'étanchéité 15 présente donc une forme complémentaire sensiblement en « U » pour envelopper ces trois bords relevés 11.

Une fois assemblé aux bords relevés 11, le joint 15 rigide est fixé à ces bords 11.

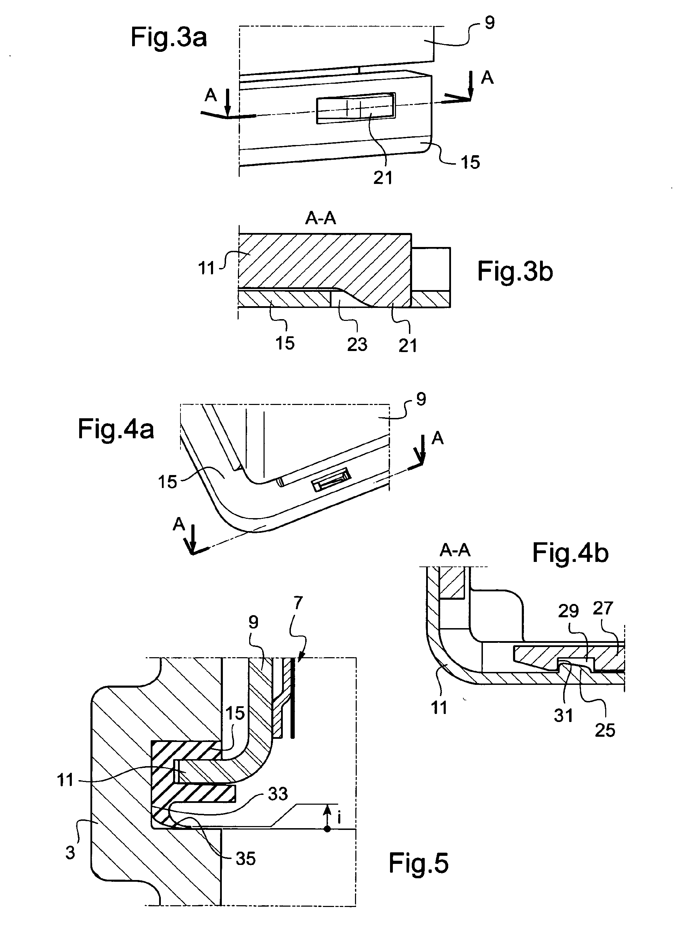

Comme l'illustrent les figures 3a,3b et 4a,4b, la fixation peut se faire par clippage.

À cet effet, on peut prévoir un système de clippage comprenant des premiers et des seconds moyens de clippage complémentaires portés d'une part par les bords relevés 11 du carter 9 et d'autre part par le joint 15 rigide.

Les premiers et seconds moyens de clippage complémentaires peuvent indifféremment être portés par les bords relevés 11 ou par le joint 15.

Selon une première variante représentée de façon schématique sur les figures 3a,3b, un bord relevé 11 présente un premier moyen de clippage tel qu'une languette 21 de clippage et le joint 15 présente un second moyen de clippage complémentaire tel qu'un orifice 23 dans lequel la languette de clippage 21 vient s'insérer.

Dans cet exemple, la languette de clippage 21 est portée sur une paroi latérale du bord relevé 11, c'est-à-dire sur le côté du bord relevé 11.

De façon complémentaire l'orifice 23 est prévu sur , une paroi latérale du joint 15 c'est-à-dire sur le côté du joint 15, de façon à se retrouver en vis-à-vis de la languette 21 lors de l'assemblage du joint 15 sur le bord relevé 11.

Selon une deuxième variante de réalisation représentée de façon schématique sur les figures 4a,4b, le bord relevé présente un premier de moyen de clippage tel qu'un ergot 25 et le joint 15 présente un second moyen de clippage complémentaire tel qu'une patte de clippage 27.

Dans cet exemple, la patte 27 présente un orifice 29 et une butée 31; l'orifice 29 vient se placer en regard de l'ergot 25 et la butée 31 vient en appui contre le bord de l'ergot 25 lors de l'assemblage du joint 15 avec le bord relevé 11.

Selon cette deuxième variante, le premier moyen de clippage est formé sur une paroi d'extrémité du bord relevé 11, ici sur le dessus du bord relevé 11 en référence aux figures 4a,4b. Le deuxième moyen de clippage est configuré pour se trouver en vis-à-vis du premier moyen de clippage.

Ainsi, lorsque l'échangeur 1 est inséré dans le collecteur 3 par exemple par coulissement via l'ouverture 4 associée du collecteur 3 selon le sens longitudinal du faisceau 7, le joint d'étanchéité 15 rigide fixé aux bords relevés 11 du carter 9, assure, en plus de sa fonction d'étanchéité, une fonction de guidage mécanique pour l'assemblage.

Un moyen de guidage complémentaire peut être prévu au niveau du collecteur 3.

À l'assemblage de l'échangeur 1 dans le collecteur 3, le joint 15 vient en contact avec le corps du collecteur 3, comme cela est mieux visible sur la figure 5.

Plus précisément, le joint 15 vient se loger dans une gorge 33 du collecteur 3. le joint d'étanchéité 15 est donc interposé entre le corps du collecteur 3 et les bords relevés 11 du carter 9 du faisceau 7.

De plus, le joint d'étanchéité 15 est par exemple un joint à lèvre 35.

On prévoit à l'état libre, ou encore non comprimé de la lèvre 35 du joint 15, une plage de valeurs pour l'interférence i entre le joint 15 et le corps délimitant la gorge 33 du collecteur 3. Cette plage de valeur est déterminée avant compression de la lèvre 35 du joint et définit une interférence minimale et une interférence maximale, permettant de garantir le contact entre le joint 15 et le corps du collecteur lorsque le joint 15 est comprimé.

On entend par « interférence », la valeur de dépassement des dimensions du joint d'étanchéité 15 par rapport aux dimensions de la gorge de réception 33 du joint d'étanchéité 15. En effet, pour garantir le contact entre le joint 15 et le corps du collecteur 3, le joint 15 présente à l'état non comprimé, des dimensions supérieures aux dimensions de la gorge de réception 33.

À titre d'exemple, pour un joint 15 à lèvre en PA6, l'interférence minimale peut être de l'ordre de 0,1 mm et l'interférence maximale peut être de l'ordre de 0,25 mm.

La lèvre 35 dans l'exemple illustré, dépasse donc d'une valeur comprise entre 0,1 mm et 0,25 mm les dimensions de la gorge 33.

À l'état comprimé, le joint 15 à lèvre est donc toujours en contact avec le corps du collecteur 3.

### Capot de fermeture

Comme précisé précédemment, l'échangeur 1 comporte en outre un capot 13 de fermeture latérale du carter 9 (cf figures 1 et 2).

Le capot 13 est donc assemblé en regard d'une face latérale 7d du faisceau 7 en fermant l'ouverture du carter 9.

Le capot 13 coiffe la petite face latérale 7d du faisceau 7 ainsi que les extrémités du carter 9. De la sorte, le carter 9 se trouve intercalé entre le faisceau 7 et le capot 13.

Le capot 13 présente donc une forme complémentaire de celle du carter 9. Selon le mode de réalisation illustré avec un carter 9 sensiblement en « U », le capot 13 présente une forme générale complémentaire sensiblement en « U ».

De plus, dans le cas d'un dispositif d'admission avec un échangeur 1 reçu dans un collecteur 3, le capot 13 permet également de fermer l'ouverture 4 du collecteur 3 prévue pour l'insertion de l'échangeur 1 dans le collecteur 3.

Le capot 13 participe donc à la tenue du faisceau 7 de plaques ou de tubes et d'éventuels perturbateurs ou turbulateurs et assure aussi le maintien de l'échangeur 1 dans le collecteur 3 d'admission d'air ou dans tout autre contenant de l'échangeur 1.

Par ailleurs, les tubulures d'entrée 17 et de sortie 19 sont fixées sur le capot 13. Afin de permettre la distribution du second fluide, le capot 13 présente donc au droit des tubulures 17,19 des orifices 37,39 respectivement associés aux tubulures 17,19 et de forme complémentaires à la forme des tubulures 17,19.

Ces orifices 37,39 communiquent avec les orifices associés prévus sur le carter 9, ainsi qu'avec les ouvertures correspondantes (non visibles sur les figures) du faisceau 7 pour permettre la circulation du second fluide dans les seconds canaux.

De plus, le capot 13 peut présenter une bordure périphérique 41 repliée. Cette bordure 41 est par exemple repliée sensiblement à 90°.

Cette bordure 41 forme par exemple une saillie par rapport au carter 9 et au faisceau 7.

Dans le cas d'un dispositif d'admission 5 comprenant un tel échangeur 1 reçu dans un collecteur 3, l'étanchéité entre l'échangeur 1 et le collecteur 3 peut se faire au niveau de cette bordure périphérique 41.

À cet effet, on peut prévoir des moyens d'étanchéité (non représentés) au niveau de la bordure périphérique 41.

De plus, le capot de fermeture latérale 7 peut présenter encore des moyens de fixation 43 sur le collecteur 3 d'admission d'air (non représenté) par exemple, qui coopèrent avec des moyens de fixation complémentaires (non représentés) portés par le collecteur 3.

Cette fixation peut se faire par exemple par brasage, collage et/ou par vissage ou encore clippage.

Les moyens de fixation 43 sont dans l'exemple illustré prévus sur la bordure périphérique 41 du capot 13 en regard d'une face latérale du collecteur 3 délimitant l'ouverture 4 par laquelle l'échangeur 1 est inséré dans le collecteur 3.

Le capot 13 assure ainsi à la fois le maintien de l'échangeur 1 dans le collecteur 3 et la fixation de l'échangeur 1 au collecteur 3.

On comprend donc qu'un échangeur 1 et un dispositif d'admission d'air 5 correspondant, comprenant un joint d'étanchéité 15 rigide enveloppant les bords relevés du carter 9, permet d'améliorer l'étanchéité tout en assurant le guidage mécanique de l'échangeur 1 lors de son insertion dans le collecteur 3 d'admission d'air.

Un tel joint d'étanchéité 15 rigide permet donc de garantir un positionnement précis et répétable tout en assurant l'étanchéité.

## Revendications

1. Dispositif d'admission d'air, notamment pour véhicule automobile, **caractérisé en ce qu'**il comporte un échangeur thermique (1) entre au moins deux fluides, notamment pour véhicule automobile, ledit échangeur comprenant un faisceau (7) d'échange thermique entre lesdits fluides, et un carter (9) de réception dudit faisceau (7), ledit dispositif d'amission comportant en outre un collecteur d'admission d'air (3) recevant ledit échangeur (1) et **en ce que** ledit collecteur d'admission (3) présente une ouverture (4) configurée pour l'insertion dudit échangeur dans ledit collecteur d'admission (3) et fermée par ledit échangeur (1) par assemblage mécanique
**caractérisé en ce que** ledit carter (9) présente une forme générale sensiblement en « U » avec trois bords relevés (11) d'un même côté dudit carter, et **en ce que** ledit échangeur comporte en outre un joint d'étanchéité (15) en matériau plastique rigide enveloppant lesdits bords relevés (11) et configuré pour assurer l'étanchéité entre ledit échangeur et le collecteur d'admission, ledit joint d'étanchéité (15) présentant une forme générale sensiblement en « U » complémentaire desdits bords relevés (11).

2. Dispositif selon la revendication 1, **caractérisé en ce que** ledit joint d'étanchéité (15) est un joint à lèvre (35).

3. Dispositif selon l'une des revendications 1 ou 2, **caractérisé en ce que** ledit joint d'étanchéité (15) est fixé sur ledit au moins un bord relevé (11).

4. Dispositif selon la revendication 3, **caractérisé en ce que** ledit au moins un bord relevé (11) présente des premiers moyens de clippage (21,25) coopérant avec des seconds moyens de clippage complémentaires (23,27) portés par ledit joint d'étanchéité (15).

5. Dispositif selon l'une quelconque des revendications précédentes, **caractérisé en ce que** ledit joint d'étanchéité (15) est réalisé en un matériau plastique rigide de la famille des polyamides.

6. Dispositif selon l'une des revendications précédentes, **caractérisé en ce que** ledit joint d'étanchéité (15) est interposé entre ledit carter (9) dudit faisceau (7) et ledit collecteur d'admission (3).

7. Dispositif selon l'une quelconque des revendications précédentes, **caractérisé en ce que** ledit joint d'étanchéité (15) a pour fonction :
- d'une part l'étanchéité entre ledit échangeur (1) et ledit collecteur d'admission (3), et
- d'autre part le guidage mécanique dudit échangeur (1) lors de l'assemblage dudit échangeur (1) audit collecteur d'admission (3).

8. Dispositif selon l'une quelconque des revendications précédentes, **caractérisé en ce qu'**il présente une interférence (i) de l'ordre de 0,1 mm à 0,25 mm entre ledit joint d'étanchéité (15) et le corps dudit collecteur (3) délimitant une gorge (33) de réception dudit joint (15).

## Patentansprüche

1. Luftansaugvorrichtung, insbesondere für ein Kraftfahrzeug, **dadurch gekennzeichnet, dass** sie einen Wärmetauscher (1) zwischen mindestens zwei Fluiden insbesondere für ein Kraftfahrzeug aufweist, wobei der Tauscher ein Wärmeaustauschbündel (7) zwischen den Fluiden und ein Aufnahmegehäuse (9) für das Bündel (7) enthält, wobei die Luftansaugvorrichtung außerdem ein Luftansaugrohr (3) aufweist, das den Tauscher (1) aufnimmt, und dass das Ansaugrohr (3) eine Öffnung (4) hat, die für die Einführung des Tauschers in das Ansaugrohr (3) konfiguriert ist und vom Tauscher (1) durch mechanischen Zusammenbau verschlossen wird,
**dadurch gekennzeichnet, dass** das Gehäuse (9) im Wesentlichen eine allgemeine U-Form mit drei erhöhten Rändern (11) auf der gleichen Seite des Gehäuses hat, und dass der Tauscher außerdem eine Dichtung (15) aus steifem Kunststoff aufweist, die die erhöhten Ränder (11) umgibt und konfiguriert ist, die Dichtheit zwischen dem Tauscher und dem Ansaugrohr zu gewährleisten, wobei die Dichtung (15) im Wesentlichen eine allgemeine U-Form hat, die zu den erhöhten Rändern (11) komplementär ist.

2. Vorrichtung nach Anspruch 1, **dadurch gekennzeichnet, dass** die Dichtung (15) eine Lippendichtung (35) ist.

3. Vorrichtung nach einem der Ansprüche 1 oder 2, **dadurch gekennzeichnet, dass** die Dichtung (15) an dem mindestens einen erhöhten Rand (11) befestigt ist.

4. Vorrichtung nach Anspruch 3, **dadurch gekennzeichnet, dass** der mindestens eine erhöhte Rand (11) erste Einklinkeinrichtungen (21, 25) aufweist, die mit komplementären zweiten Einklinkeinrichtungen (23, 27) zusammenwirken, die von der Dichtung (15) getragen werden.

5. Vorrichtung nach einem der vorhergehenden Ansprüche, **dadurch gekennzeichnet, dass** die Dichtung (15) aus einem steifen Kunststoff der Familie der Polyamide hergestellt wird.

6. Vorrichtung nach einem der vorhergehenden Ansprüche, **dadurch gekennzeichnet, dass** die Dichtung (15) zwischen das Gehäuse (9) des Bündels (7) und das Ansaugrohr (3) eingefügt ist.

7. Vorrichtung nach einem der vorhergehenden Ansprüche, **dadurch gekennzeichnet, dass** die Dichtung (15) zur Aufgabe hat:
- einerseits die Dichtheit zwischen dem Tauscher (1) und dem Ansaugrohr (3), und
- andererseits die mechanische Führung des Tauschers (1) beim Zusammenbau des Tauschers (1) mit dem Ansaugrohr (3).

8. Vorrichtung nach einem der vorhergehenden Ansprüche, **dadurch gekennzeichnet, dass** sie eine Überdeckung (i) in der Größenordnung von 0,1 mm bis 0,25 mm zwischen der Dichtung (15) und dem Körper des Rohrs (3) aufweist, der eine Aufnahmerille (33) der Dichtung (15) begrenzt.

## Claims

1. Air intake device, notably for a motor vehicle, **characterized in that** it comprises a heat exchanger (1) exchanging heat between at least two fluids, notably for a motor vehicle, the said exchanger comprising a core bundle (7) for the exchange of heat between the said fluids, and a housing (9) for housing the said core bundle (7), the said intake device further comprising an air intake manifold (3) receiving said exchanger (1) and **in that** the said intake manifold (3) has an opening (4) configured for the insertion of the said exchanger into the said intake manifold (3) and which is closed by the said exchanger (1) by mechanical assembly
**characterized in that** the said housing (9) is substantially U-shaped overall with three turned-up edges (11) on the same side of the said housing, and **in that** the said exchanger furthermore comprises a rigid plastic seal (15) enveloping the said turned-up edges (11) and configured to seal between the said exchanger and the intake manifold, the said seal (15) being substantially U-shaped overall to complement the said turned-up edges (11).

2. Device according to Claim 1, **characterized in that** the seal (15) is a lip seal with lip (35).

3. Device according to one of Claims 1 and 2, **characterized in that** the said seal (15) is fixed to the said at least one turned-up edge (11).

4. Device according to Claim 3, **characterized in that** the said at least one turned-up edge (11) has first clip-fastening means (21, 25) collaborating with complementary second clip-fastening means (23, 27) borne by the said seal (15).

5. Device according to any one of the preceding claims, **characterized in that** the said seal (15) is made of a rigid plastic from the polyamide family.

6. Device according to one of the preceding claims, **characterized in that** the said seal (15) is interposed between the said housing (9) of the said core bundle (7) and the said intake manifold (3).

7. Device according to any one of the preceding claims, **characterized in that** the said seal (15) has the functions:
- firstly of sealing between the said exchanger (1) and the said intake manifold (3), and
- secondly of mechanically guiding the said exchanger (1) when the said exchanger (1) is being assembled with the said intake manifold (3) .

8. Device according to any one of the preceding claims, **characterized in that** there is an interference (i) of the order of 0.1 mm to 0.25 mm between the said seal (15) and the body of the said manifold (3) delimiting a groove (33) to house the said seal (15).
